**Europäisches Patentamt**

**European Patent Office**

**Office européen des brevets**

(11) Veröffentlichungsnummer: **0 237 601**
**B1**

(12) # EUROPÄISCHE PATENTSCHRIFT

(45) Veröffentlichungstag der Patentschrift:
31.05.89

(51) Int. Cl.⁴: **G01C 11/04**

(21) Anmeldenummer: **86103748.9**

(22) Anmeldetag: **19.03.86**

(54) Verfahren zur photogrammetrischen Erfassung eines Objektes mit Hilfe zumindest eines opto-elektrischen Festkörper-Flächensensors.

(43) Veröffentlichungstag der Anmeldung:
**23.09.87 Patentblatt 87/39**

(45) Bekanntmachung des Hinweises auf die Patenterteilung:
**31.05.89 Patentblatt 89/22**

(84) Benannte Vertragsstaaten:
**AT CH DE FR GB IT LI NL SE**

(56) Entgegenhaltungen:
**DE-A- 3 428 325**

(73) Patentinhaber: **Rollei Fototechnic GmbH, Salzdahlumer Strasse 196, D-3300 Braunschweig(DE)**

(72) Erfinder: **Wester-Ebbinghaus, Wilfried, Prof. Dr., Meistersingerweg 32, D-3013 Barsinghausen(DE)**
Erfinder: **Luhmann, Thomas, Dipl.-Ing., Strintbergstrasse 21, D-3000 Hannover 61(DE)**
Erfinder: **Mangelsdorf, Jürgen, Dr., Stadtweg 13, D-3302 Cremlingen(DE)**
Erfinder: **Pini, Peter, Dipl.-Ing., Oststrasse 151, D-3300 Braunschweig(DE)**

(74) Vertreter: **Gramm, Werner, Prof. Dipl.-Ing. et al, Patentanwälte Gramm + Lins Theodor-Heuss-Strasse 2, D-3300 Braunschweig(DE)**

## Beschreibung

Die Erfindung betrifft ein Verfahren zur photogrammetrischen Erfassung eines Objektes mit Hilfe zumindest eines opto-elektrischen Festkörper-Flächensensors, dessen Bildfläche kleiner ist als die des angestrebten Gesamtbildes, wobei in das photogrammetrische Abbildungssystem das Punktfeld eines das Gesamtbild abdeckenden Réseaus, z.B. eine Glasplatte mit geeigneten, rasterartig verteilten Punktmarkierungen einbezogen und der Flächensensor so im Abbildungsraum angeordnet werden, daß er jeweils zumindest eine Masche des Réseaus flächendeckend im Sensorbild abbildet, wobei eine Sensorfläche hinter dem in der Bildebene der Aufnahmekammer angeordneten Kamméréseau angeordnet wird, so daß das Kammerréseau und das Aufnahmeobjekt auf die Sensorfläche projizierbar sind, und wobei die Sensorfläche zur fortlaufenden Aufnahme von Réseaumasche zu Réseaumasche verschoben wird wobei die im digitalen Teilbild des Flächensensors abgebildeten Réseaupunkte auf ihre Sollposition im Abtastréseau eingepaßt und die hierdurch erhaltenen Transformationsparameter zur Überführung des Teilbildes in ein einheitliches Gesamt-Bildsystem verwendet werden.

Ein derartiges Verfahren läßt sich der DE-A 3 428 325 entnehmen. Wird bei diesem Verfahren eine das gesamte zu erfassende Bildformat abdeckende Réseauplatte in den Abbildungsprozeß einbezogen, so können die auf den Flächen der Sensorblöcke entstandenen Teilbilder im Rahmen der digitalen Bildauswertung numerisch mit Hilfe der auf den Sensorflächen mit abgebildeten Réseaupunkten eindeutig in die Ebene des Réseaus transformiert werden. An die physikalische Lage der Sensorblöcke im Abbildungsraum sind dann nur geringe, instrumentell mit wenig Aufwand zu verwirklichende Anforderungen zu stellen: Es soll mindestens je eine Masche des Réseaus flächendeckend auf die Sensorfläche mit abgebildet werden; und die Sensorflächen sollen so nahe an die Réseauebene herangeführt sein, daß die Punkte des Réseaus zusammen mit dem Aufnahmeobjekt ausreichend scharf abgebildet werden. Durch die Transformation der auf den Bildflächen der einzelnen Sensorblöcke entstandenen Teilbilder in die Ebene des Réseaus wird das gesamte Bildformat mit hoher, durch die kalibrierte Réseauplatte vorgegebenen Genauigkeiten erhalten.

Ein Réseau im Abbildungsvorgang erlaubt einerseits die Konstruktion eines Flachbett-Abtasters hoher Genauigkeit mit geringem instrumentellen Aufwand. Durch die Möglichkeit, mehrere Sensorflächen rasterartig in eindeutigem gegenseitigen geometrischen Bezug zu Verbänden zusammenzufassen, ist weiterhin die Voraussetzung für eine instrumentell einfache und zugleich hochgenaue flächenhaft simultane Gesamterfassung eines Bildformats von prinzipiell beliebiger Größe gegeben.

Bei der Verwendung eines Flachbett-Abtasters zur Analog-Digital-Wandlung liegt die zu digitalisierende transparente Vorlage unter der Réseauplatte auf einer lichtdurchlässigen Unterlage (z.B. Opal-Glasplatte) und wird mit Durchlicht auf die Sensorfläche abgebildet. Sensorfläche und Abbildungsobjekt werden zur fortlaufenden Belichtung von Réseaumasche zu Réseaumasche geführt. Durch Variation des Abbildungsmaßstabs läßt sich die Abtastrate verändern, d.h., es läßt sich die Größe des Bildelements in der Vorlage festlegen, das auf ein Sensorelement des Sensorblocks abgebildet wird. Dabei ist das Réseau hinsichtlich Maschenweite und Punktmarkierungsstärke anzupassen (Austausch der Réseauplatte).

Die genannte Vorveröffentlichen zeigt ferner die Anordnung eines Sensorblocks hinter der Bildebene eines photogrammetrischen Aufnahmesystems. Die Réseaupunkte werden gemeinsam mit dem Aufnahmeobjekt mit Hilfe des Objektivs der Aufnahmekammer auf die Sensorfläche abgebildet. Zur Erfassung des Gesmatformats kann, bei statischer Aufnahmeanordnung, ein einzelner Sensor zur fortlaufenden Belichtung nach Art eines Flachbett-Abtasters von Réseaumasche zu Réseaumasche geführt werden. Eine simultane Erfassung des Gesamtformats wird möglich, wenn mehrere Sensorblöcke rasteratig in mehreren Verbänden zusammengefaßt hinter einer gemeinsamen Réseauplatte angeordnet werden. Der Rasterabstand der Sensorblöcke in den Verbänden ist einerseits durch den Rasterabstand der Réseaupunkte vorgegeben und wird andererseits berücksichtigen müssen, daß die lichtempfindlichen Flächen der Sensorblöcke bauartbedingt nur bis zu einem bestimmten Mindestabstand nebeneinander angeordnet werden können.

Der Erfindung liegt die Aufgabe zugrunde, für die photogrammetrische Erfassung eines Objektes verschiedene Verfahren anzugeben.

Diese Aufgabe wird gemäß der Erfindung dadurch gelöst, daß eine optische Trennung von Objekt und Réseau durch Doppelbelichtung erfolgt, wobei zuerst die Réseaupunkte bei einer externen, separaten Beleuchtung vom Flächensensor abgebildet werden, ohne daß die Objektinformation sichtbar ist, daß das so gewonnene erste Sensorbild digital abgespeichert wird, und daß dann das den gleichen geometrischen Bezug zum Réseau aufweisende Objekt abgebildet und das so gewonnene zweite Sensorbild ebenfalls digital abgespeichert werden.

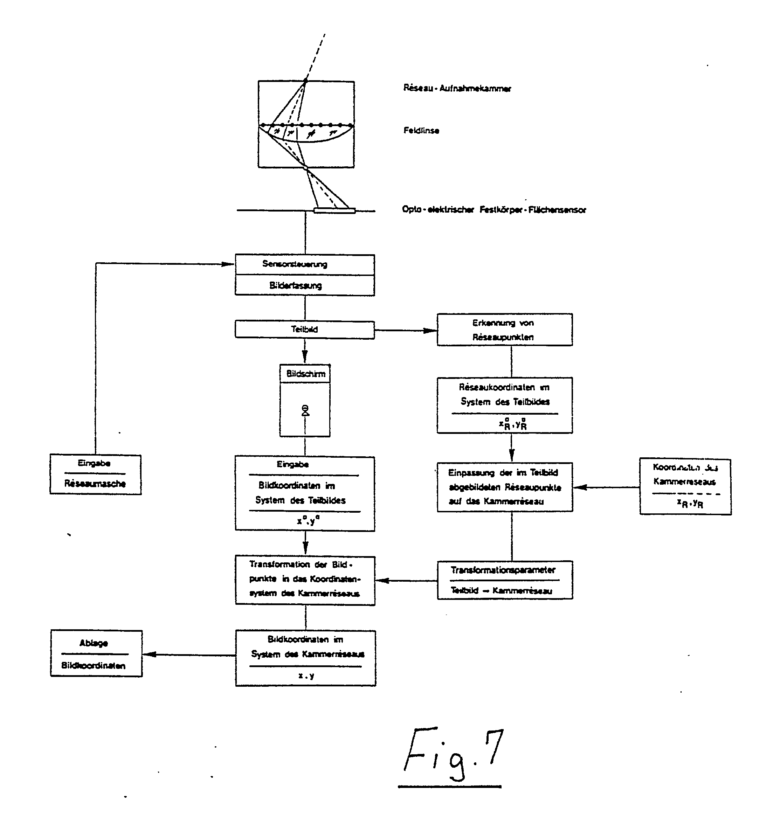

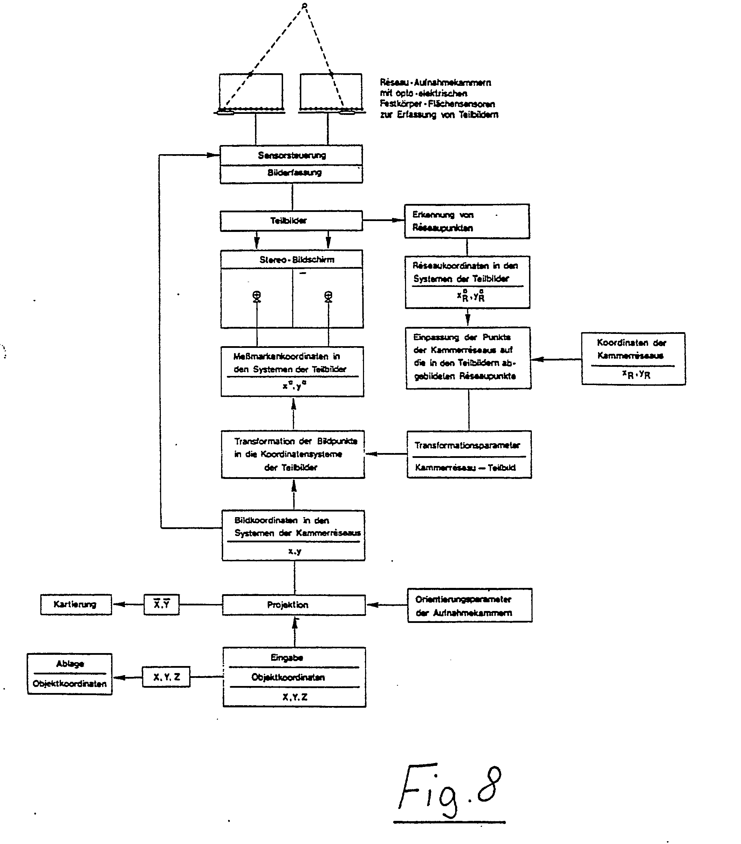

In den Zeichnungen sind einige als Beispiele dienende Ausführungsformen der Erfindung dargestellt, wobei die Figuren 1 bis 9 die einzelnen Verfahrensschritte verschiedener Verfahren jeweils in einem Blockschaubild zeigen. Es zeigen:

Figur 1 ein Verfahren zur Digital-Umwandlung analoger Bildvorlagen;

Figur 2 ein Verfahren zur digitalen Mono-Bildmessung;

Figur 3 ein Verfahren zur digitalen Stereo-Bildmessung mit Steuerung des Objektpunktes;

Figur 4 ein Verfahren zur digitalen automatischen Mono-Bildmessung;

Figur 5 ein Verfahren zur digitalen automatischen Bildmessung mit simultaner Mehrbild-Punkterkennung;

Figur 6 ein Verfahren zur digitalen Mono-Bildaufnahme und Bildmessung;

Figur 7 ein Verfahren zur digitalen Mono-Bildaufnahme und Bildmessung mit wählbarer Bildelementgröße;

Figur 8 ein Verfahen zur digitalen Stereo-Bildaufnahme und Bildmessung.

Figur 9 den Datenfluß für die Aufnahme eines Teilbildes in Abhängigkeit von der Verarbeitungszeit bei einem Doppelbelichtungsverfahren und

Figur 10 ein abgewandeltes Verfahren nach den Fig. 6 u. 8.

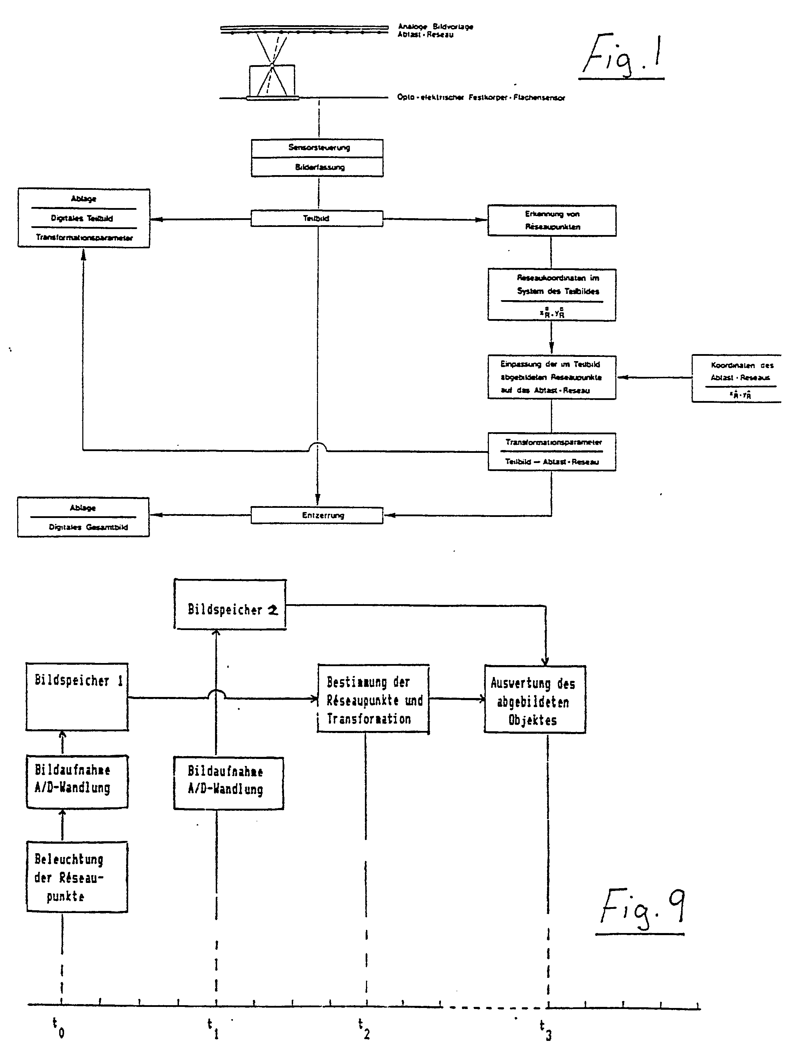

Bei dem in Figur 1 dargestellten Verfahren können die Transformationsparameter gemeinsam mit dem digitalen Teilbild abgelegt, oder aber dazu verwendet werden, die Teilbilder durch Entzerrung zu einem digitalen Gesamtbild zusammenzufügen.

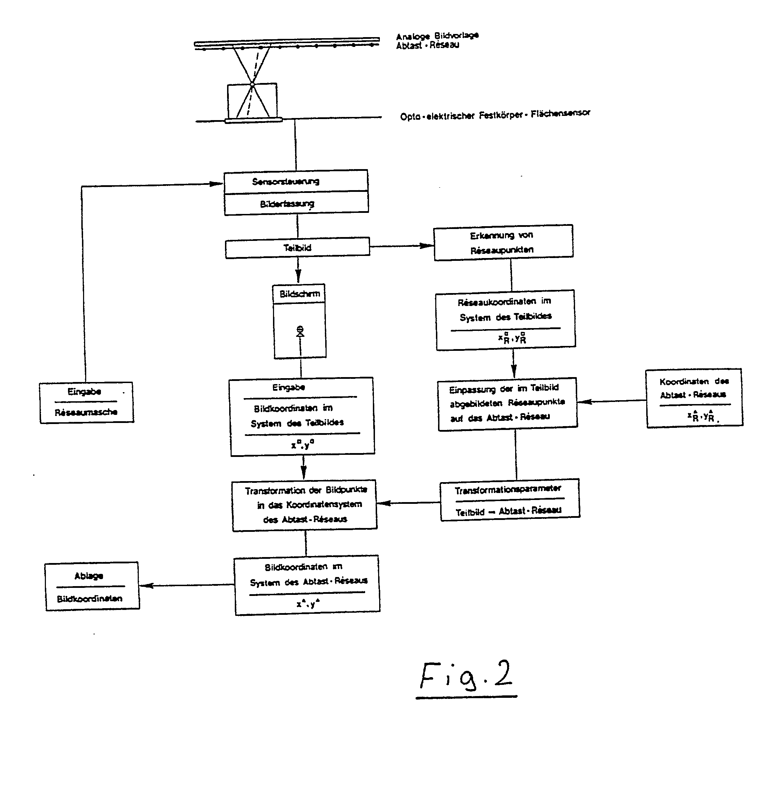

Bei einem digitalen Mono-Bildmeßsystem ist es vorteilhaft, wenn nach Wahl einer die zu messenden Bildpunkte enthaltenden Réseaumasche das zugehörige Teilbild auf einem Bildschirm abgebildet wird, und daß in dieser Abbildung Bildkoordinaten gemessen werden, die zusammen mit den aus der Réseaueinpassung gewonnenen Transformationsparametern in das Koordinatensystem des Abtastréseaus transformiert werden. Optisch veranschaulicht ist dieses Verfahren in Figur 2.

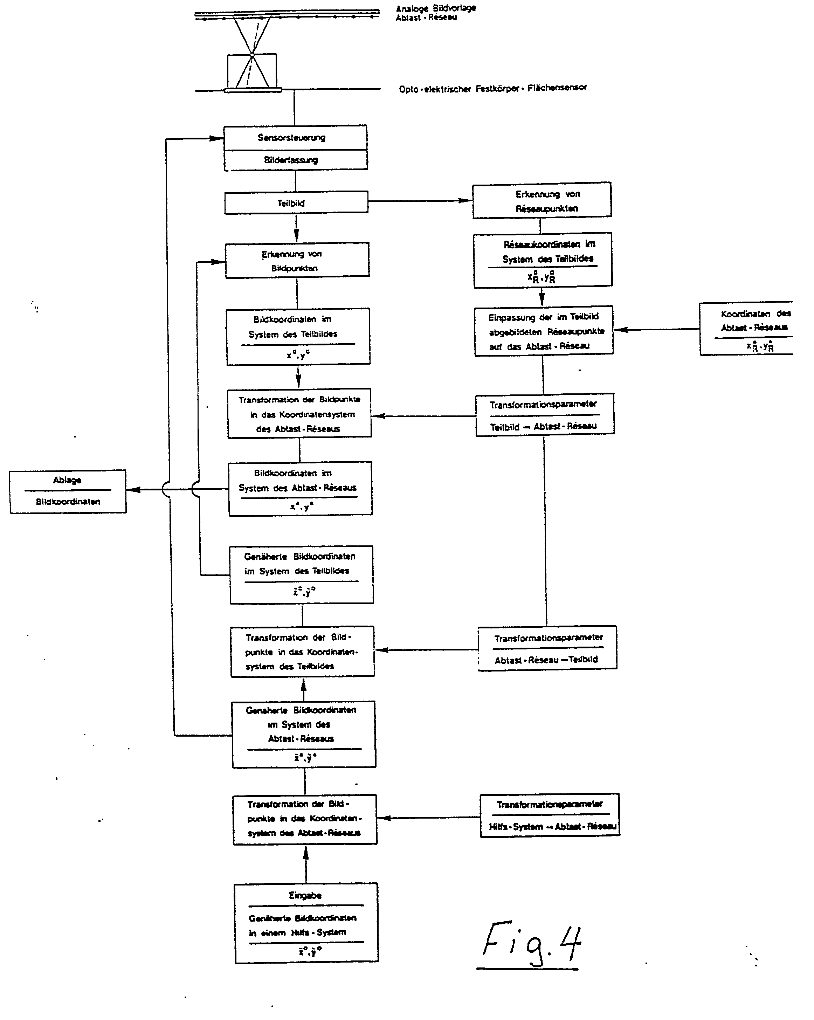

Bei einem digitalen automatischen Mono-Bildmeßsystem kann das System grundsätzlich nach dem Prinzip gemäß Figur 1 arbeiten. Jedoch ist es vorteilhaft, wenn die durch digitale Verarbeitung der Teilbilder durchgeführte automatische Punkterkennung unterstützt wird durch zusätzlich bereitgestellte genäherte Bildkoordinaten im System des Teilbildes, die in ein Hilfssystem eingegeben und in das Koordinatensystem des Abtastréseaus transfor miert werden, um so den Flächensensor über Réseaumaschen zu steuern, die die zu bestimmenden Bildpunkte enthalten, und die schließlich in das System des vom Flächensensor erfaßten Teilbildes transformiert werden. Dieses Verfahren ist in der Figur 4 verdeutlicht.

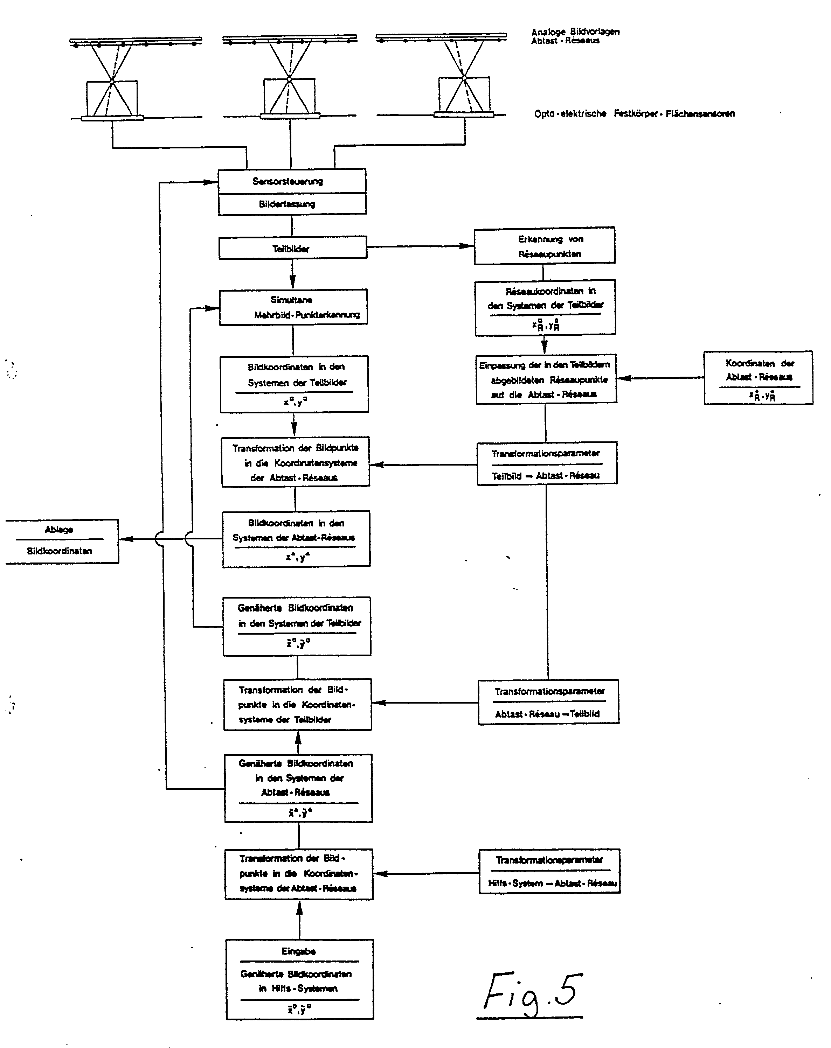

Ein nach Figur 4 arbeitendes Verfahren kann auch simultan für mehrere analoge Bildvorlagen durchgeführt werden. Figur 5 zeigt hierfür die Verwendung von drei analogen Bildvorlagen in Verbindung mit drei Abtastréseaus.

In Verbindung mit dem in der Beschreibungseinleitung an erster Stelle erläuterten Verfahren kann erfindungsgemäß vorgesehen werden, daß zur digitalen Stereo-Bildmessung zwei analoge bildvorlagen in Kontakt mit je einem Abtastréseau gebracht und darüber bzw. darunter und parallel dazu je ein opto-elektrischer Festkörper-Flächensensor zusammen mit je einer Abbildungsoptik manuell oder mittels eines vorgegebenen Programms verschoben wird, um die Bildvorlagen maschenweise abzuarbeiten, wobei die aus eingegebenen Objektkoordinaten mit Hilfe der Orientierungsparameter der Aufnahmekammer berechneten Bildkoordinaten in die Systeme der beiden Abtastréseaus transformiert werden, um die beiden Flächensensoren auf die betroffenen Réseaumaschen der beiden Bilder zu steuern und so auf einem Stereobildschirm den entsprechenden Teilbereich des Objektes stereokopisch darzubieten, worauf sich dann in den Systemen der Teilbilder die Meßmarken des Stereobildschirmes auf die Bildpunkte führen lassen, die dem eingegebenen Objektpunkt entsprechen.

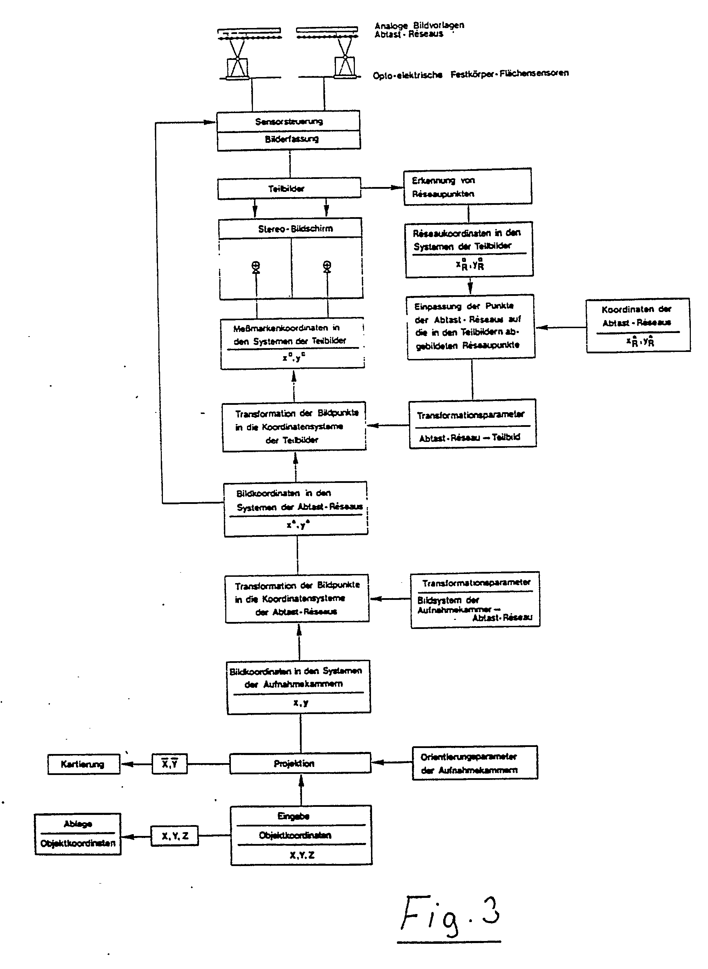

Diese digitale Stereo-Bildmessung mit Steuerung des Objektpunktes ist in Figur 3 dargestellt. Dieses Meßprinzip entspricht im Grundsatz dem analytischen Plotter; es erlaubt dynamisch räumliche Messung im stereoskopisch realisierten Modell und liefert on-line eine Kartierung (Stereo-Kartierung) oder räumliche Objektkoordinaten.

In Verbindung mit dem in der Beschreibungseinleitung an zweiter Stelle erläuterten Verfahren kann erfindungsgemäß vorgesehen werden, daß nach Wahl einer die zu messenden Bildpunkte enthaltenden Réseaumasche das zugehörige Teilbild auf einem Bildschirm abgebildet wird, und daß in dieser Abbildung Bildkoordinaten gemessen werden, die zusammen mit den aus der Einpassung der im Teilbild abgebildeten Résaupunkte auf das Kammerréseau gewonnenen Transformationsparametern in das Koordinatensystem des Kammerréseaus transformiert werden.

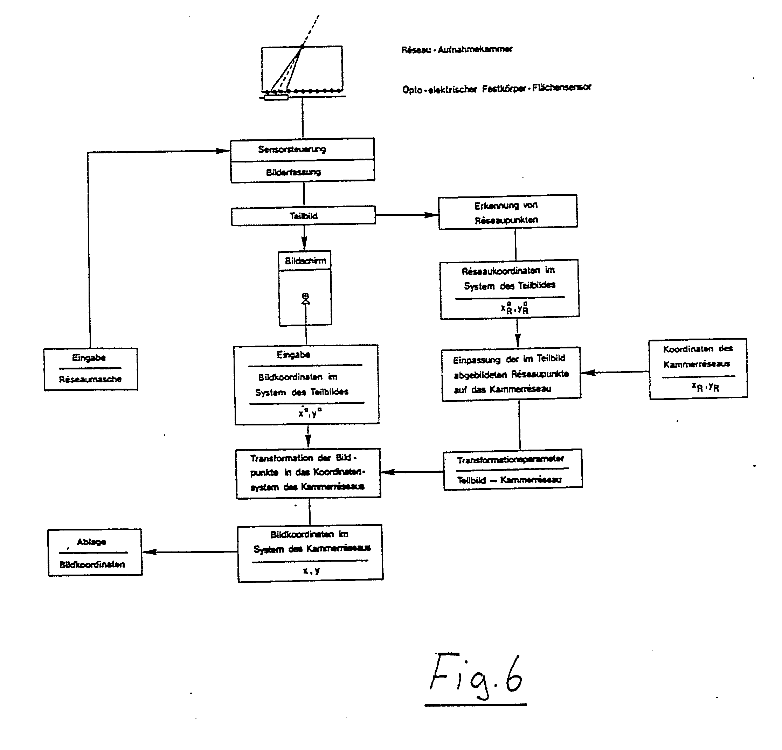

Dieses digitale Mono-Mildaufnahme- und Bildmeßsystem ist in Figur 6 verdeutlicht. Im Prinzip entspricht das System dem der Figur 2, wobei jedoch der Flächensensor hinter einer in der Abbildungsebene der Aufnahmekammer angebrachten Réseauplatte geführt ist.

Um bei dem digitalen Mono-Bildaufnahme- und Bildmeßsystem gemäß Figur 6 die Bildelementgröße wählbar zu machen, ist es vorteilhaft, wenn das in der Aufnahmekammer entstandene Objektbild zusammen mit dem Kammerréseau ein zweites Mal abgebildet wird, wobei der Flächensensor in dieser zweiten Abbildungsfläche vorgesehen wird, um so den Abbildungsmaßstab des digitalen Bildes zu variieren. Ähnlich wie bei dem in Figur 1 dargestellten System kann damit die Größe der Sensorelemente unterschiedlich großen Bildelementen im Bildsystem der Aufnahmekammer zugeordnet werden.

Bei einem digitalen Stereo-Bildaufnahme- und Bildmaßsystem kann in Verbindung mit dem in der Beschreibungseinleitung an zweiter Stelle erläuterten Verfahren erfindungsgemäß vorgesehen werden, daß zur digitalen Stereo-Bildmessung zwei Réseau-Aufnahmekammern Verwendung finden, wobei die aus eingegebenen Objektkoordinaten mit Hilfe der Orientierungsparameter der Aufnahmekammern berechneten Bildkoordinaten in die Koordinatensysteme der Teilbilder transformiert werden, um die beiden Flächensensoren auf die betroffenen Réseaumaschen der beiden Bilder zu steuern und so auf einem Stereobildschirm den entsprechenden Teilbereich des Objektes stereoskopisch darzubieten, worauf sich dann in den Systemen der Teilbilder die Meßmarken des Stereobildschirmes auf die Bildpunkte führen lassen, die den eingegebenen Objektpunkten entsprechen.

Das System entspricht im Prinzip dem der Figur 3, jedoch wird der Flächensensor hinter einer in der Abbildungsebene der Aufnahmekammer angebrachten Réseauplatte geführt. Da das System des Kammerréseaus zugleich das Bildraumsystem darstellt, können die aus Objektpunkten gewonnenen Bildkoordinaten unmittelbar zur Steuerung des Abtast- und Meßsystems benutzt werden; im Unterschied zu dem Verfahren gemäß Figur 3 ist also ein Übergang vom Kammersystem zum System eines Abtastréseaus nicht erforderlich.

Da die Sensorpositionierung auf optischem Wege erfolgt, müssen die Réseaupunkte so gestaltet sein, daß sie mit größtmöglicher Genauigkeit meßbar sind. Mit heutigen Korrelations- und Mustererkennungsverfahren lassen sich schwarze, rechtwinklige Kreuze mit einer Genauigkeit von 1 bis 3 μm bestimmen. Diese Genauigkeit ist zuverlässig nur dann erreichbar, wenn sich die Réseaupunkte eindeutig vom Hintergrund trennen lassen. Besitzen jedoch Réseaupunkt und Objekt die gleiche Schwärzung, kann der Punkt nicht identifiziert und der Sensor damit nicht positioniert werden.

Die Trennung von Réseau und Bildinformation kann numerisch durchgeführt werden, wenn sich die Signalintensität des Réseaupunktes von der des Hintergrundes signifikant unterscheidet, wenn also die Differenz der Grauwerte größer ist als der Rauschanteil im Bild. Die Genauigkeit der Punktbestimmung wird umso schlechter je höher der Rauschanteil im Bild ist und je inhomogener der Hintergrund ist.

Zur Vermeidung der genannten Nachteile wird erfindungsgemäß eine optische Trennung von Objekt und Réseau durch Doppelbelichtung vorgeschlagen, wobei zuerst die Réseaupunkte bei einer externen, separaten Beleuchtung vom Flächensensor abgebildet werden, ohne daß die Objektinformation sichtbar ist, daß das so gewonnene erste Sensorbild digital abgespeichert wird, und daß dann das den gleichen geometrischen Bezug zum Réseau aufweisende Objekt abgebildet und das so gewonnene zweite Sensorbild ebenfalls digital abgespeichert wird.

Dabei ist es vorteilhaft, wenn in dem ersten, nur die Réseaupunkte aufweisenden Bild die Punktbestimmung zur Sensorpositionierung und anschließend die geometrische Auswertung des Objektbildes durchgeführt werden und wenn bei der Auswertung des zweiten Sensorbildes die gemessenen Bildkoordinaten durch die gefundenen Transformationsparameter direkt im Koordinationssystem des Réseaus angegeben werden.

Um die Réseaupunkte separat vom Sensor abbilden zu lassen, ohne zugleich die Objektinformationen sichtbar werden zu lassen, ist die Verwendung von reflektierenden Réseaupunkten vorteilhaft, die durch Seiten- oder Auflicht zum Leuchten gebracht werden können. Werden halb lichtdurchlässige Réseaupunkte verwendet, läßt sich bei der zweiten Belichtung das Objekt weitgehend ungestört vom Réseau abbilden.

Der geometrische Bezug zwischen den Bildern des Réseaus und des Objektes ist nur dann bekannt, wenn sich der Sensor in der Zeit zwischen den Aufnahmen nicht verändert hat. Die Taktzeit muß daher möglichst kurz sein. Handelsübliche CCD-Videokameras und Analog-Digital-Wandler arbeiten mit einer Frequenz von 1/30 sec. Diese Taktzeit läßt sich bei Verwendung von zwei Bildspeichern und geeigneter Beleuchtungssteuerung erreichen.

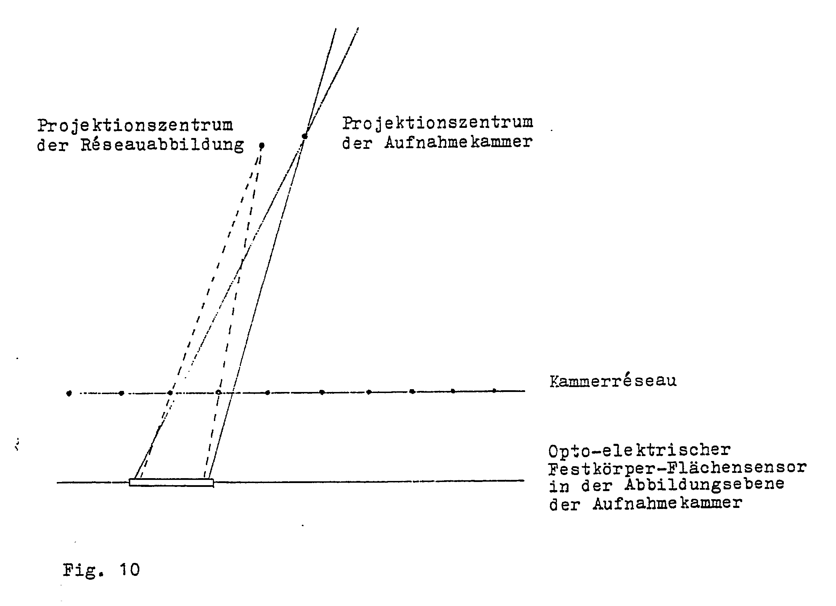

Figur 9 verdeutlicht den Datenfluß für die Aufnahme eines Teilbildes in Abhängigkeit von der Verarbeitungszeit. Nach der Bildaufnahme zum Zeitpunkt $t_0$ (Réseau, Bildspeicher 1) und $t_1$ (Objekt, Bildspeicher 2) kann zum Zeitpunkt $t_2$ das erste Bild ausgewertet werden. Da sich nur Réseaupunkte abbilden, ist eine sichere und - bedingt durch den gleichmäßig hohen Kontrast in der Umgebung des Punktes - eine sehr genaue Punktbestimmung möglich. Zum Zeitpunkt $t_3$ kann nun das zweite Bild ausgewertet werden, wobei die gemessenen Bildkoordinaten durch die gefundenen Transformationsparameter direkt im Koordinatensystem des Réseaus angegeben werden können. Die Taktzeit für die Aufnahme eines Bildes beträgt

$$\Delta t = t_1 - t_0 = t_2 - t_1 .$$

Der Zeitpunkt $t_3$ ist für die geometrische Stabilität des Systems unerheblich, da die digital gespeicherten Bilder über einen beliebigen Zeitraum unveränderlich vorliegen.

Läßt sich der opto-elektrische Festkörper-Flächensensor nicht ausreichend dicht an das Kammerréseau heranbringen, ergeben sich Probleme dabei, Objekt bzw. Abbildung und Réseau gleichzeitig scharf abzugliden. Denn wenn die Ebene des Réseaus nicht mit der Abbildungsebene zusammenfällt, wird durch die flächenhafte Austrittspupille (AP) des Aufnahmeobjektives das Réseau unscharf auf der Sensorfläche abgebildet. Daher ist es erfindungsgemäß vorteilhaft, wenn in derartigen Fällen die Abbildungsebene der Aufnahme, in der der Flächensensor geführt wird, außerhalb der Ebene des Réseaus angeordnet wird, und daß das Réseau mit einer zweiten Zentralprojektion auf die Sensorfläche abgebildet wird. Durch ein zweites, nahezu punktförmiges Projektionszentrum wird das Kammerreséau konturenscharf in die Aufnahmeebene projiziert mit dem weiteren Vorteil, daß die Réseaumarken zeitlich simul tan oder alternierend eingelesen werden können. Ist der Abstand zwischen Réseau und Abbildungsebene sowie die Fläche der AP genügend groß, so erscheinen die durch das Aufnahmeobjektiv entworfenen Konturen des Réseau sehr unscharf und damit nahezu transparent. Damit wird auch das Erfassen von normalerweise durch das Réseau verdeckten Objektpunkten ermöglicht. Dieses vorstehende Beispiel ist in Figur 10 theoretisch erläutert.

**Patentansprüche**

1. Verfahren zur photogrammetrischen Erfassung eines Objektes mit Hilfe zumindest eines optoelektrischen Festkörper-Flächensensors, dessen Bildfläche kleiner ist als die des angestrebten Gesamtbildes, wobei in das photogrammetrische Abbildungssystem das Punktfeld eines das Gesamtbild abdeckenden Réseaus, z.B. eine Glasplatte mit geeigneten, rasterartig verteilten Punktmarkierungen einbezogen und der Flächensensor so im Abbildungsraum angeordnet werden, daß er jeweils zumindest eine Masche des Réseaus flächendeckend im Sensorbild abbildet, wobei die im digitalen Teilbild

des Flächensensors abgebildeten Réseaupunkte auf ihre Sollposition im Abtastréseau eingepaßt und die hierdurch erhaltenen Transformationsparameter zur Überführung des Teilbildes in ein einheitliches Gesamt-Bildsystem verwendet werden, wobei der Flächensensor hinter dem in der Bildebene der Aufnahmekammer angeordneten Kammerréseau angeordnet wird, so daß das Kammerréseau und das Aufnahmeobjekt auf eine Sensorfläche projizierbar sind, und wobei der Flächensensor zur fortlaufenden Aufnahme von Réseaumasche zu Réseaumasche verschoben wird, dadurch gekennzeichnet, daß eine optische Trennung von Objekt und Réseau durch Doppelbelichtung erfolgt, wobei zuerst die Réseaupunkte bei einer externen, separaten Beleuchtung vom Flächensensor abgebildet werden, ohne daß die Objektinformation sichtbar ist, daß das so gewonnene erste Sensorbild digital abgespeichert wird, und daß dann das den gleichen geometrischen Bezug zum Réseau aufweisende Objekt abgebildet und das so gewonnene zweite Sensorbild ebenfalls digital abgespeichert werden.

2. Verfahren nach Anspruch 1, dadurch gekennzeichnet, daß die Transformationsparameter gemeinsam mit dem digitalen Teilbild abgelegt werden.

3. Verfahren nach Anspruch 1, dadurch gekennzeichnet, daß die Transformationsparameter dazu verwendet werden, die Teilbilder durch Entzerrung zu einem digitalen Gesamtbild zusammenzufügen.

4. Verfahren nach Anspruch 1 oder 2, dadurch gekennzeichnet, daß nach Wahl einer die zu messenden Bildpunkte enthaltenden Réseaumasche das zugehörige Teilbild auf einem Bildschirm abgebildet wird, und daß in dieser Abbildung Bildkoordinaten gemessen werden, die zusammen mit den aus der Réseaueinpassung gewonnenen Transformationsparametern in das Koordinatensystem des Abtastréseaus transformiert werden.

5. Verfahren nach Anspruch 1, 2 oder 3, dadurch gekennzeichnet, daß die durch digitale Verarbeitung der Teilbilder durchgeführte automatische Punkterkennung unterstützt wird durch zusätzlich bereitgestellte genäherte Bildkoordinaten im System des Teilbildes, die in ein Hilfssystem eingegeben, in das Koordinatensystem des Abtastréseaus transformiert und schließlich in das System des vom Flächensensor erfaßten Teilbildes transformiert werden.

6. Verfahren nach Anspruch 5, dadurch gekennzeichnet, daß es simultan für mehrere analoge Bildvorlagen durchgeführt wird.

7. Verfahren nach einem der vorhergehenden Ansprüche, dadurch gekennzeichnet, daß zur opto-elektrischen Analog-Digital-Wandlung analog vorliegender Bilder die transparente Vorlage mit dem Abtastréseau in Kontakt und gemeinsam mit dem Abtastréseau mit Hilfe eines Objektivs auf die Sensorfläche projiziert wird, und wobei Sensorfläche und Objektiv zur fortlaufenden Aufnahme von Réseaumasche zu Réseaumasche gemeinsam verschoben werden.

8. Verfahren nach Anspruch 1, dadurch gekennzeichnet, daß zur digitalen Stereo-Bildmessung zwei analoge Bildvorlagen in Kontakt mit je einem Abtastréseau gebracht und darüber bzw. darunter und parallel dazu je ein opto-elektrischer Festkörper-Flächensensor zusammen mit je einer Abbildungsoptik manuell oder mittels eines vorgegebenen Programms verschoben wird, um die Bildvorlagen maschenweise abzuarbeiten, wobei die aus eingegebenen Objektkoordinaten mit Hilfe der Orientierungsparamater der Aufnahmekammer berechneten Bildkoordinaten in die Systeme der beiden Abtastréseaus transformiert werden, um die beiden Flächensensoren auf die betroffenen Réseaumaschen der beiden Bilder zu steuern und so auf einem Stereobildschirm dem entsprechenden Teilbereich des Objektes stereoskopisch darzubieten, worauf sich dann in den Systemen der Teilbilder die Meßmarken des Stereobildschirmes auf die Bildpunkte führen lassen, die dem eingegebenen Objektpunkt entsprechen.

9. Verfahren nach Anspruch 1, dadurch gekennzeichnet, daß für ein opto-elektrisches Aufnahmesystem zur Aufnahme statischer Objekte nach Wahl einer die zu messenden Bildpunkte enthaltenden Réseaumasche das zugehörige Teilbild auf einem Bildschirm abgebildet wird, und daß in dieser Abbildung Bildkoordinaten gemessen werden, die zusammen mit den aus der Einpassung der im Teilbild abgebildeten Réseaupunkte auf das Kammerréseau gewonnenen Transformationsparametern in das Koordinatensystem des Kammerréseaus transformiert werden.

10. Verfahren nach Anspruch 9, dadurch gekennzeichnet, daß das in der Aufnahmekammer entstandene Objektbild zusammen mit dem Kammerréseau ein zweites Mal abgebildet wird, wobei der Flächensensor in dieser zweiten Abbildungsfläche vorgesehen wird, um so den Abbildungsmaßstab des digitalen Bildes zu variieren.

11. Verfahren nach Anspruch 1, dadurch gekennzeichnet, daß für ein opto-elektrisches Aufnahmesystem zur Aufnahme statischer Objekte und zur digitalen Stereo-Bildmessung zwei Réseau-Aufnahmekammern Verwendung finden, wobei die aus eingegebenen Objektkoordinaten mit Hilfe der Orientierungsparameter der Aufnahmekammern berechneten Bildkoordinaten in die Koordinatensysteme der Teilbilder transformiert werden, um die beiden Flächensensoren auf die betroffenen Réseaumaschen der beiden Bilder zu steuern und so auf einem Stereobildschirm den entsprechenden Teilbereich des Objektes stereoskopisch darzubieten, worauf sich dann in den Systemen der Teilbilder die Meßmarken des Stereobildschirmes auf die Bildpunkte führen lassen, die den eingegebenen Objektpunkten entsprechen.

12. Verfahren nach einem der vorhergehenden Ansprüche, dadurch gekennzeichnet, daß in dem ersten, nur die Réseaupunkte aufweisenden Bild die Punktbestimmung zur Sensorpositionierung und anschließend die geometrische Auswertung des Objektbildes durchgeführt werden.

13. Verfahren nach Anspruch 12, dadurch gekennzeichnet, daß bei der Auswertung des zweiten Sensorbildes die gemessenen Bildkoordinaten durch die gefundenen Transformationsparameter direkt im Koordinatensystem des Reseaus angegeben werden.

14. Verfahren nach einem der vorhergehenden Ansprüche, gekennzeichnet durch die Verwendung von reflektierenden Réseaupunkten.

15. Verfahren nach einem der vorhergehenden Ansprüche, gekennzeichnet durch die Verwendung von halb lichtdurchlässigen Réseaupunkten.

16. Verfahren nach Anspruch 9 oder 11, dadurch gekennzeichnet, daß die Abbildungsebene der Aufnahmekammer, in der der Flächensensor geführt wird, außerhalb der Ebene des Réseaus angeordnet wird, und daß das Réseau mit einer zweiten Zentralprojektion auf die Sensorfläche abgebildet wird.

17. Verfahren nach einem der vorhergehenden Ansprüche, gekennzeichnet durch die Verwendung von zwei Bildspeichern zur Erzielung kurzer Taktzeiten.

**Claims**

1. Method for the photogrammetrical measurement of an object with at least one optoelectrical solid-state image sensor whose image area is smaller than that of the desired whole image, wherein the photogrammetrical imaging system includes the point area of a grid covering the whole image, e.g. a glass plate with suitable point markings distributed in raster fashion, and the image sensor is arranged in the imaging space in such a way that in each case it images at least one unit of the grid, covering the area in the sensor image, wherein the grid points imaged in the digital partial image of the image sensor are adjusted to their nominal position in the scanning grid and the resulting transformation parameters are used to convert the partial image to a unitary whole image system, wherein the image sensor is disposed behind the camera grid disposed in the image plane of the survey camera, so that the camera grid and the photographic object can be projected onto a sensor surface, and wherein the image sensor is displaced from one grid unit to the next for continuous surveying, characterised in that optical separation of object and grid takes place by double exposure, wherein first the grid points are imaged by the image sensor under separate, external lighting without the object information being visible, the resulting first sensor image is stored digitally, and then the object having the same geometrical relationship to the grid is imaged and the resulting second sensor image is also stored digitally.

2. Method according to claim 1, characterised in that the transformation parameters are filed together with the digital partial image.

3. Method according to claim 1, characterised in that the transformation parameters are used to combine the partial images by restitution into a digital whole image.

4. Method according to claim 1 or 2, characterised in that after selection of a grid unit containing the picture elements to be measured, the associated partial image is reproduced on a screen, and in this reproduction are measured image coordinates which, together with the transformation parameters obtained from grid adjustment, are transformed to the coordinate system of the scanning grid.

5. Method according to claim 1, 2 or 3, characterised in that the automatic point detection performed by digital processing of the partial images is assisted by additionally provided, approximated image coordinates in the partial image system, which are fed to an auxiliary system and transformed to the coordinate system of the scanning grid and are finally transformed to the system of the partial image detected by the image sensor.

6. Method according to claim 5, characterised in that it is carried out simultaneously for several analogue originals.

7. Method according to any of the preceding claims, characterised in that for optoelectrical analogue-to-digital conversion of analogue images, the transparent original is brought into contact with the scanning grid and projected with the scanning grid onto the sensor surface by means of a lens, and wherein sensor surface and lens are displaced together from one grid unit to the next for continuous surveying.

8. Method according to claim 1, characterised in that for digital stereo photogrammetry, two analogue originals are each brought into contact with a scanning grid, and one above and one below same and parallel thereto an optoelectrical solid-state image sensor together with an imaging lens is displaced manually or by means of a preset programme for working through the originals one unit at a time, wherein the image coordinates calculated from input object coordinates by means of the orientation parameters of the survey camera are transformed to the systems of the two scanning grids in order to direct the two image sensors onto the respective grid units of the two images and thus present the corresponding part of the object stereoscopially on a stereo screen, whereupon the measuring marks of the stereo screen can then be guided, in the systems of the partial images, to the picture elements which correspond to the input object point.

9. Method according to claim 1, characterised in that for an optoelectrical survey system for surveying static objects, after selection of a grid unit containing the picture elements to be measured, the associated partial image is reproduced on a screen, and in this reproduction are measured image coordinates which, together with the transformation parameters obtained from adjustment of the grid points reproduced in the partial image to the camera grid, are transformed to the coordinate system of the camera grid.

10. Method according to claim 9, characterised in that the object image formed in the survey camera is reproduced a second time together with the camera grid, wherein the image sensor is provided in this second imaging surface in order thus to vary the image scale of the digital image.

11. Method according to claim 1, characterised in that two grid cameras are used for an optoelectrical survey system for surveying static objects and for digital stereo photogrammetry, wherein the image coordinates calculated from input object coordinates by means of the orientation parameters of the survey cameras are transformed to the coordinate systems of the partial images, in order to direct the two image sensors onto the respective grid units of the two images and thus present the corresponding part of the object stereoscopically on a stereo screen, whereupon the measuring marks of the stereo screen can then be guided, in the systems of the partial images, to the picture elements which correspond to the input object points.

12. Method according to any of the preceding claims, characterised in that point measurement is carried out in the first image comprising only the grid points for positioning of the sensor and then geometrical analysis of the object image is carried out.

13. Method according to claim 12, characterised in that in analysis of the second sensor image the measured image coordinates are indicated directly in the grid coordinate system by the transformation parameters found.

14. Method according to any of the preceding claims, characterised by the use of reflective grid points.

15. Method according to any of the preceding claims, characerised by the use of grid which are semi-transparent to light.

16. Method according to claim 9 or 11, characterised in that the image plane of the survey camera, in which the image sensor is guided, is disposed outside the plane of the grid, and the grid is reproduced with a second central projection on the sensor surface.

17. Method according to any of the preceding claims, characterised by the use of two image stores to obtain short cycle times.

**Revendications**

1. Procédé pour la saisie photogrammétrique d'un objet à l'aide d'au moins un capteur plan monolithique optoélectrique dont le plan image est plus petit que l'image entière visée, dans lequel le champ de points d'un réseau, par exemple une plaque de verre comprenant des marquages ponctuels appropriés répartis suivant une trame, réseau qui recouvre l'image entière, est inclus dans le système de mise en image photogrammétrique, et le capteur plan est disposé dans l'espace de mise en image de sorte qu'il met en image chaque fois l'aire totale d'au moins une maille du réseau dans l'image captée, les points de réseau mis en image dans l'image partielle numérique du capteur plan étant insérés à leur position prescrite dans le réseau d'analyse et les paramètres de transformation ainsi obtenus étant utilisés pour transférer l'image partielle dans un système d'image entière unitaire, le capteur plan étant disposé à l'arrière du réseau de chambre lui-même disposé dans le plan image de la chambre de prise de vue de sorte que le réseau de chambre et l'objet de la prise de vue sont projetables sur une surface du capteur et le capteur plan étant décalé de maille de réseau en maille de réseau pour une prise de vue continue, caractérisé en ce qu'une isolation optique de l'objet et du réseau est produite par double pose, les points de réseau étant en premier lieu mis en image par le capteur plan au moyen d'un éclairage externe et séparé sans que l'information objet soit visible, en ce que la première image captée ainsi obtenue est enregistrée numériquement, et en ce qu'ensuite l'objet présentant la même relation géométrique par rapport au réseau est mis en image et la deuxième image captée ainsi obtenue est aussi enregistrée numériquement.

2. Procédé selon la revendication 1, caractérisé en ce que les paramètres de transformation sont enregistrés en commun avec l'image partielle numérique.

3. Procédé selon la revendication 1, caractérisé en ce que les paramètres de transformation sont utilisés pour composer les images partielles en une image entière numérique par redressement.

4. Procédé selon l'une des revendications 1 ou 2, caractérisé en ce que, après le choix d'une maille de réseau contenant les points images à mesurer, l'image partielle associée est visualisée sur un écran et en ce que des coordonnées d'image sont mesurées dans cette visualisation, lesquelles sont transformées pour passer dans le système de coordonnées du réseau d'analyse, avec les paramètres de transformation obtenus à partir de l'insertion du réseau mesuré dans le réseau d'analyse.

5. Procédé selon l'une des revendications 1, 2 ou 3, caractérisé en ce que l'acquisition automatique de points mise en œuvre par traitement numérique des images partielles est assistée par mise en place supplémentaire de coordonnées d'image approchés dans le système de l'image partielle, qui sont entrées dans un système auxiliaire, sont transformées pour passer dans le système de coordonnées du réseau d'analyse et finalement transformées pour passer dans le système de l'image partielle captée par le capteur plan.

6. Procédé selon la revendication 5, caractérisé en ce qu'il est exécuté simultanément pour plusieurs originaux d'images analogiques.

7. Procédé selon l'une des revendications précédentes, caractérisé en ce que, en vue d'une conversion analogique-numérique optoélectrique d'images analogiques présentes, l'original transparent est porté en contact avec le réseau d'analyse et est projeté conjointement avec le réseau d'analyse, à l'aide d'un objectif, sur la surface du capteur, et en ce que la surface du capteur et l'objectif sont décalés de maille de réseau en maille de réseau pour une prise de vue continue.

8. Procédé selon la revendication 1, caractérisé en ce que, en vue d'une mesure d'image stéréoscopique numérique, on met deux originaux analogiques en contact chacun avec un réseau d'analyse, et au-dessus, respectivement en dessous et parallèlement à chaque réseau d'analyse, on déplace manuellement ou au moyen d'un programme associé, un capteur plan monolithique photoélectrique respectif conjointement avec une optique de mise en image respective pour décomposer les originaux par mailles, les coordonnées d'image calculées à partir de coordonnées d'objet données et à l'aide des paramètres d'orientation de la chambre de prise de vue, étant transformées pour passer dans le système des deux réseaux d'analyse, afin de commander les deux capteurs plans vers les mailles de réseau concernées des deux images et de représenter ainsi stéréoscopiquement le sous-domaine correspondant de l'objet sur un écran stéréoscopique, après quoi les traits de mesure de l'écran stéréoscopique peuvent, dans les systèmes des images partielles, être guidés sur les points d'image qui correspondent au point objet donné en entrée.

9. Procédé selon la revendication 1, caractérisé en ce que, pour un système de prise de vue optoélectrique pour la prise de vue d'un objet statique, après le choix d'une maille de réseau contenant les points d'image à mesurer, l'image partielle associée est visualisée sur un écran, et en ce que dans cette visualisation des coordonnées d'image sont mesurées, lesquelles, conjointement avec les paramètres de transformation obtenus par l'insertion dans le réseau de chambre des points de réseau mis en image dans l'image partielle, sont transformées pour passer dans le système de coordonnées du réseau de chambre.

10. Procédé selon la revendication 9, caractérisé en ce que l'image objet engendrée dans la chambre de prise de vue est mise en image une seconde fois conjointement avec le réseau de chambre, le capteur plan étant prévu dans ce deuxième plan image pour faire varier l'échelle de mise en image de l'image numérique.

11. Procédé selon la revendication 1, caractérisé en ce que, pour un système de prise de vue optoélectrique pour la prise de vue d'objets statiques et pour la mesure d'image stéréoscopique numérique, on utilise deux chambres de prise de vue à réseau, les coordonnées d'image calculées à partir de coordonnées d'objet données et à l'aide des paramètres d'orientation des chambres de prise de vue étant transformées pour passer dans le système de coordonnées des images partielles, en vue de commander les deux capteurs plans vers les mailles de réseau concernées des deux images et ainsi de présenter stéréoscopiquement le sous-domaine correspondant de l'objet sur un écran stéréoscopique, après quoi les traits de mesure de l'écran stéréoscopique peuvent, dans les systèmes des images partielles, être guidés sur les points images, qui correspondent aux points objets donnés en entrée.

12. Procédé selon l'une des revendications précédentes, caractérisé en ce que dans la première image représentant uniquement les points de réseau, on procède à la détermination de points pour le positionnement du capteur et, ensuite, à l'exploitation géométrique de l'image objet.

13. Procédé selon la revendication 12, caractérisé en ce que lors de l'exploitation de la seconde image captée, les coordonnées d'image mesurées sont indiquées directement dans le système de coordonnées du réseau, au moyen des paramètres de transformation établis.

14. Procédé selon l'une des revendications précédentes, caractérisé par l'utilisation de points de réseau réfléchissants.

15. Procédé selon l'une des revendications précédentes, caractérisé par l'utilisation de points de réseau semi-translucides.

16. Procédé selon l'une des revendications 9 ou 11, caractérisé en ce que le plan image de la chambre de prise de vue, dans laquelle le capteur plan est guidé, est disposé en dehors du plan du réseau, et en ce que le réseau est mis en image avec une seconde projection centrale sur la surface du capteur.

17. Procédé selon l'une des revendications précédentes, caractérisé par l'utilisation de deux enregistreurs d'image pour raccourcir les temps de cycle.

*Fig. 1*

*Fig. 9*

Fig. 2

Fig. 3

EP 0 237 601 B1

Analoge Bildvorlage
Ablast - Réseau

Opto · elektrischer Festkörper · Flächensensor

| Sensorsteuerung |
| Bilderfassung |

Teilbild → Erkennung von Réseaupunkten

Réseaukoordinaten im
System des Teilbildes
$$x_R^a, y_R^a$$

Erkennung von
Bildpunkten

Bildkoordinaten im
System des Teilbildes
$$x^a, y^a$$

Einpassung der im Teilbild
abgebildeten Réseaupunkte
auf das Abtast - Réseau ← Koordinaten des
Abtast - Réseau
$$x_R^A, y_R^A$$

Transformation der Bildpunkte
in das Koordinatensystem
des Abtast - Réseaus ← Transformationsparameter
Teilbild → Abtast - Réseau

Ablage
Bildkoordinaten ← Bildkoordinaten im
System des Abtast - Réseaus
$$x^A, y^A$$

Genäherte Bildkoordinaten
im System des Teilbildes
$$\bar{x}^a, \bar{y}^a$$

Transformation der Bildpunkte in das Koordinatensystem des Teilbildes ← Transformationsparameter
Abtast - Réseau → Teilbild

Genäherte Bildkoordinaten
im System des
Abtast - Réseaus
$$\bar{x}^A, \bar{y}^A$$

Transformation der Bildpunkte in das Koordinatensystem des Abtast - Réseaus ← Transformationsparameter
Hilfs - System → Abtast - Réseau

Eingabe
Genäherte Bildkoordinaten
in einem Hilfs - System
$$\bar{x}^a, \bar{y}^a$$

Fig.4

Fig.5

Réseau - Aufnahmekammer

Opto - elektrischer Festkörper - Flächensensor

Sensorsteuerung

Bilderfassung

Teilbild

Bildschirm

Erkennung von
Réseaupunkten

Réseaukoordinaten im
System des Teilbildes

$x_R^a, y_R^a$

Eingabe

Réseaumasche

Eingabe

Bildkoordinaten im
System des Teilbildes

$x^a, y^a$

Einpassung der im Teilbild
abgebildeten Réseaupunkte
auf das Kammerréseau

Koordinaten des
Kammerréseaus

$x_R, y_R$

Transformation der Bild -
punkte in das Koordinaten -
system des Kammerréseaus

Transformationsparameter

Teilbild → Kammerréseau

Ablage

Bildkoordinaten

Bildkoordinaten im
System des Kammerréseaus

$x, y$

Fig.6

Fig. 7

Fig. 8

Projektionszentrum der Réseauabbildung

Projektionszentrum der Aufnahmekammer

Kammerréseau

Opto-elektrischer Festkörper-Flächensensor in der Abbildungsebene der Aufnahmekammer

Fig. 10